# EUROPEAN PATENT SPECIFICATION

(11) **EP 1 018 891 B1**
(45) Date of publication and mention of the grant of the patent: **24.11.2004**
(21) Application number: 98946700.6
(22) Date of filing: 15.09.1998
(51) Int. Cl.: A22C 25/14

(54) **METHOD AND APPARATUS FOR FISH PROCESSING**
VERFAHREN UND APPARAT ZUR BEARBEITUNG VON FISCH
PROCEDE DE TRAITEMENT DU POISSON ET APPAREIL CORRESPONDANT

(30) Priority: 15.09.1997 IS 455997
(43) Date of publication of application: 19.07.2000
(73) Proprietor: Marel HF., 112 Reykjavik (IS); OXFORD INTELLIGENT MACHINES LTD., Oxford OX2 0DP (GB)
(72) Inventor: ARNARSON, Hordur, IS-109 Reykjavik (IS); KRISTINSSON, Sigurour, IS-240 Grindavik (IS); SNAELAND, Petur, IS-107 Reykjavik (IS); BUCKINGHAM, Rob, Bristol BS9 4HR (GB); GRAHAM, Andrew, Crispin, Bristol (GB); JONES, Timothy, J., Banbury OX15 0SP (GB); DAVEY, Peter, G., Oxford OX2 6SH (GB)
(74) Representative: Plougmann & Vingtoft A/S
(86) International application number: PCT/IS1998/000008
(87) International publication number: WO 1999/013731

(56) References cited:
- EP-A2- 0 360 174
- DE-C1- 3 237 725
- NO-B- 122 352
- NO-B- 137 224
- US-A- 2 959 810
- US-A- 3 319 284
- US-A- 3 680 174
- US-A- 3 972 091
- US-A- 4 599 765
- US-A- 4 765 031

## Description

The invention concerns an apparatus and a method for processing fish, including severing the head of a fish, said apparatus comprising a structural frame and a severing means supported by the frame, for cutting the head from a fish body, said severing means comprising, a moveable supporting means, for receiving and supporting the fish body while the head is cut there off and thereafter releasing it, a gripping means, for gripping and positioning the head of the fish prior to and during the cutting.

### Background Art

Apparatus for severing the head of fish such as cod is known from a number of patents and patent applications. The following US patents are considered to show methods and apparatus most relevant to the invention introduced in this patent application; US Patent No. 3.680.174, 3.885.270, 3.972.091, 4.599.765, 4.765.031.

EP 360 174 discloses an apparatus for mechanical cleaning of fish, including a holding device for fixing the head of the fish in a backwardly bent position relatively to the trunk, as well as knives for performing a first cut at an angle of 10-15° with the axis of the trunk of the fish, and a second cut at a larger angle, the second cut reaching the spine of the fish.

US 3,680,174 discloses an apparatus for gripping a fish for mechanical dressing. In the apparatus, the fish is suspended from its pectoral fins with its head pointing upwards, and the fish can be rotated during the cutting operation. The apparatus does not, however, include means for moveable gripping of the head.

A common factor for those and many other inventions in this field is the use of a pair of circular knives arranged at an angle to each other for performing the actual cut. Another common factor is to have means for holding and transporting the fish body and the head through a cutting unit specially by holding the body or the head.

One disadvantage of the prior art known apparatus and methods is the fact, that by non of them has it been possible to achieve fully automatic cutting of a curved head cut, where the cutting equipment is adjustable in accordance to the fish size.

### Brief Description of the Invention

The object of the present invention is to provide an apparatus and method for severing the head of fish by obtaining an optimal cutting curve between the head and the body. In this way it is believed that the utility of the fish can be increased considerably.

The invention as described according to the invention is unique in that the severing means is characterised in that the apparatus comprises means for rotating the gripping means with respect to the frame, and means for transporting the gripping means towards the cutting means, so said gripping means is moveable in such a manner, that the fish head is bent backwards with respect to the longitudinal axis of the fish, before the cutting is engaged and then gradually turned back towards the same longitudinal axis during the cutting operation, in order to obtain a optimal cutting curve between the fish head and the body, and thereafter releasing it, and a moveable cutting means, for cutting the head from the fish body, where the fish body is placed in the supporting means, and the head in the gripping means.

The invention is moreover unique as the severing means comprising a guiding means for the pectorial fins of the fish to be guided towards and/or along as the fish is moved through the apparatus.

The severing means is further unique in comprising: one or more measuring means for measuring and collecting certain data of the characteristics of the fish in the supporting means, or prior thereto, and a data processing means for communicating with the measuring means and receiving data of the characteristics of the individual fish, the processing means using the data to calculate the optimal cutting curve for the respective fish and activating other means of the apparatus in accordance there to.

The measuring means is unique in comprising: a weighing unit for weighing the fish prior to cutting of the head, and/or length measuring device for measuring one or more of certain parameters of the fish, and/or device for locating certain parts of the fish e.g. the snout of the fish, eyes or the pectoral fins.

The invention is further unique in comprising: a first conveyor in-feed means, on or attach to the frame for feeding the fish to the supporting means and the gripping means, and a second conveyor means, for receiving the fish from the severing means and transporting the fish body with or without the head away for further processing.

The supporting means is characterised in being moveable in respect to the cutting means, as well as the gripping means being moveable in respect to the cutting means. The supporting means, is further turnable with respect to its axes of movement in such a way that the fish is further bent around the neck/the cutting area, in order to obtain the optimal cutting curve. The supporting means further consists of two opposite supporting shells, a upper shell and lower shell, that support the back and respectively the belly of the fish under its transportation. The supporting means further or alternatively consists of a basket like supporting means splitted symmetrically in two opposite supporting shells, that support the sides of the fish under its transportation.

The gripping means, for gripping and holding the head of the fish during the severing is characterised in comprising a gripper including two independable moveable gripping arms. The gripping means, comprise further at least two jaw wises being independently turntable and moveably supported by the frame, said gripping means thereby being able to grip and hold the fish head in a predetermined position during the severing of the head. The gripping means, further comprise a snout position device for positioning the snout of the fish in the gripping means.

The cutting means is also characterised in comprising two opposite to each other rotable circular cutting blades. The two cutting blades are arranged in such a way that their respective planes tangent to each other and their angular placement is adjustable to be preferably between 90 - 180°, more preferably 140 - 175°, most preferably 155 - 160°. The cutting means further and alternatively comprises a two opposite to each other, chain saw a like cutting blades.

The guiding means is unique in consisting of two guide rails merging into parallel inner edge arranged symmetrically to the cutting blades of the cutting means.

The invention is also characterised in comprising a method for automatically severing the head from fish, said method comprising the steps of transporting the fish by a first conveyor means, meant for transporting the fish towards a severing means in which the head is cut from the body, the fish body is supported and the head gripped and the head severed from the body in such a manner that an optimum cutting curve is achieved, and finally the head and body transported by a second conveyor means for further processing, characterised in that;
- the fish is fed into a supporting means, with the belly facing away from the cutting means,
- the head is gripped with a gripping means, and adjusted according to the cutting means,
- the gripping means subsequently rotated with respect to the body and moved in such a manner that the head is bent backwards, and transported towards the cutting means,
- during the cutting, the head is bent/rotated back towards normal position, by rotation/movement of the gripping means and thereby obtaining an optimal cutting curve between the head and the body.

The method is further unique in that the fish is moved lengthways towards the tail until the pectoral fins are being supported by a guiding means.

The method is further unique in that the gripping of the fish by the gripping means and the fish placement in the apparatus is being adjusted for each individual fish based upon pre-measurements and/or calculation of the size and/or type of fish.

### General description of the drawings

The invention will be described in further details with reference to the accompanying drawings, in
Fig. 1a shows side view of the apparatus,
Fig. 1b shows perspective view of the main parts of the apparatus,
Fig 2 shows in more detail side view from fig. 1a,
Fig 3 shows the arrangement of the cutting means,
Fig 4 shows the movement of fish towards the cutting means,
Fig. 5 and 6 shows the main parts of the fish and how it is cut,
Fig. 7, 8 and 9 show three different positions of the fish during the cutting.

### More detailed description of the drawings

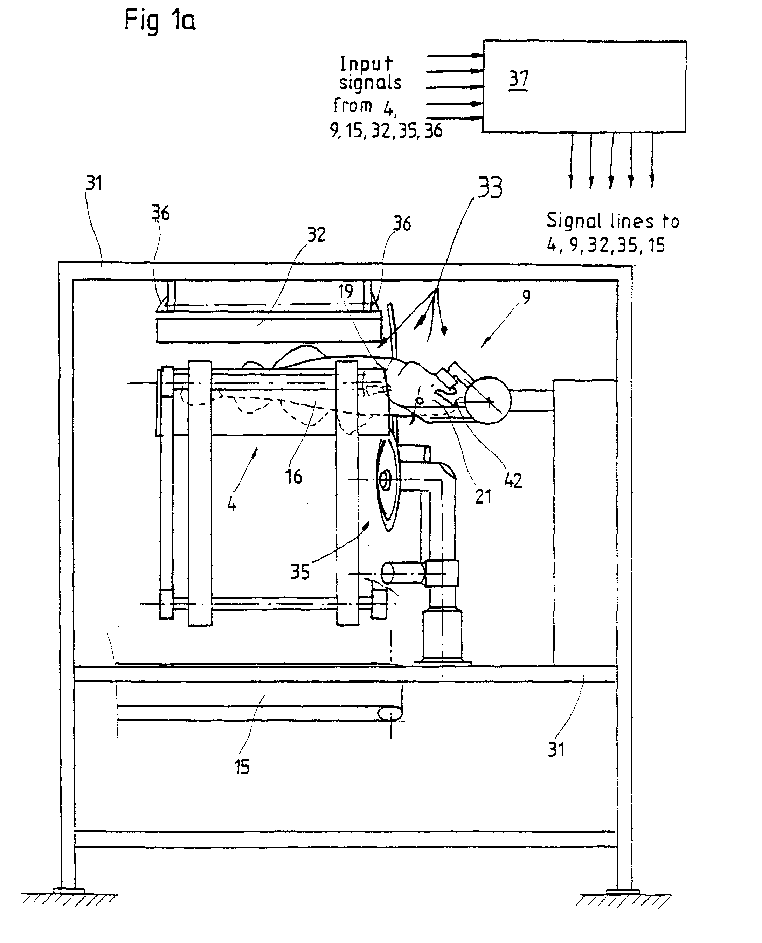

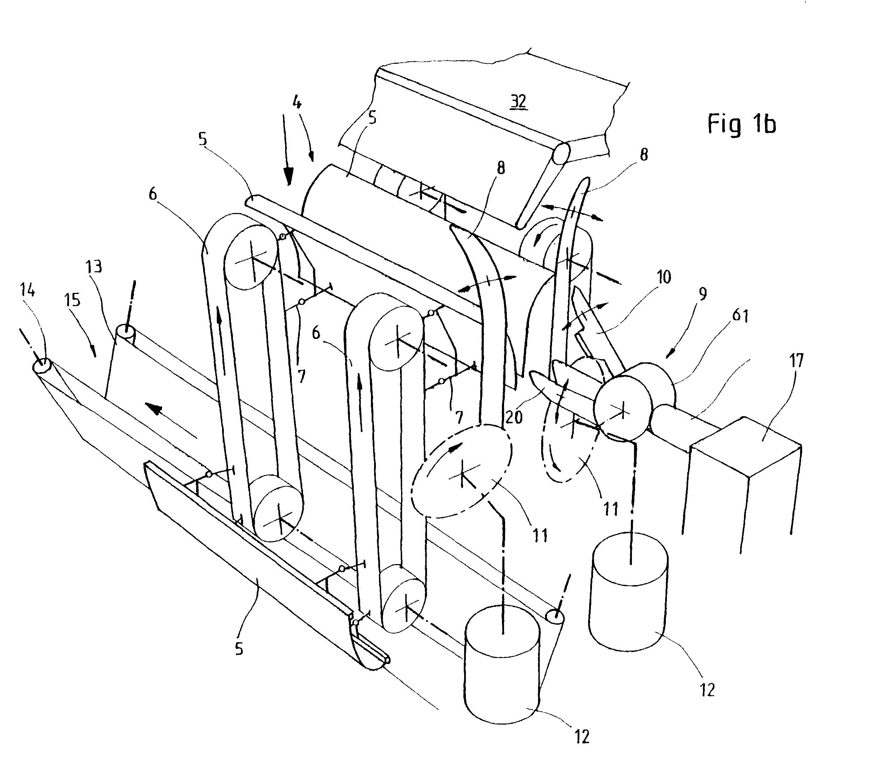

Fig. 1 shows side view of the apparatus. The apparatus comprises a supporting structural frame)(31), but only the outlines of the frame are shown on the figure. Most of the other equipment is also built onto the frame. The first conveyor means (32) transporting the fish towards the apparatus is connected to or is placed close to the frame. The conveyor means is not necessary for the accomplishment of the working of the invention, but is optional. Below the conveyor means the severing means (33) is arranged. The severing means includes all the main parts of the apparatus and is a kind of common denominator for the main parts of the invention. The severing means includes; the supporting means (4), resting on the frame (31) forming a kind of basked that receives the body (16) of the fish, supports it and convey through its passage through the severing means. A gripping means (9) also resting on the frame, gripping the fish head (21) and holds it tight, but moveable and rotatable related to the frame. And a cutting means (35) placed in the line of movement of the fish moved in the supporting means and the gripping means. When the fish has been moved through the severing means (33) and the head (21) cut from the body (16) according to a line (path) (19), along the after part of the skull bone down and behind the ear fin and further behind collar bone. The fish body falls down to the second conveyor means (15) that moves the fish without or with the head away for further processing. The second conveyor means is in principle no more than the first conveyor means, necessary for the accomplishment of the invention. It is possible to conduct the cutting in a perfect manner without the in- or outfeed conveyors. The infeed and outfeed would then be done by hand and the fish body without the head and the head would fall down where it would be collected for further processing.

The figure 1 further show control unit, which could be data processing means (37) and its connections to other means of the apparatus. The respective parts are shown schematically. Further a measuring means (36) is indicated, but not shown, for measuring or detecting of fish conveyed towards the apparatus. At last means for locating the snoop (42) of the fish is indicated bu not shown.

Fig. 1b shows a perspective view of the main parts of the severing means as well as the in-feed conveyor (32) and the second conveyor (15), for in-feeding and out-feeding of the fish after processing in the apparatus. Looking at the figure with reference to the movement of the fish through the apparatus, the fish, transported on the in-feed conveyor falls onto the supporting means (4) shown on the figure as two half parts of curve-formed shell (5) forming a kind of basked the fish body falls into. The shell half parts are fastened by hinges (7) onto a kind of loop-conveyor (6). By movement of the conveyor (6) the shells are moved parallel toward the cutting knives (11). Aside to the supporting means is a gripping means (9) with upper and lower gripping arm (10, 20) connected together with rotatable hinges (46). The gripping means is connected by arm (47) to a sledge (17) and is moveable there along up and down along the movement of the supporting means (4). In between the gripping means (9) and the supporting means (4) a guiding means (8) is arranged consisting of two rail like arms. Along the lower end of the arms, two circular knives (11) are arranged. Their cutting edge intercepts. The knives are driven by separate motor (12) shown schematically on the figure. Below the severing means a second conveyor (15) is arranged as v-formed channel made of two conveyor belts (13, 14), lying together at the bottom, but away from each other at the top.

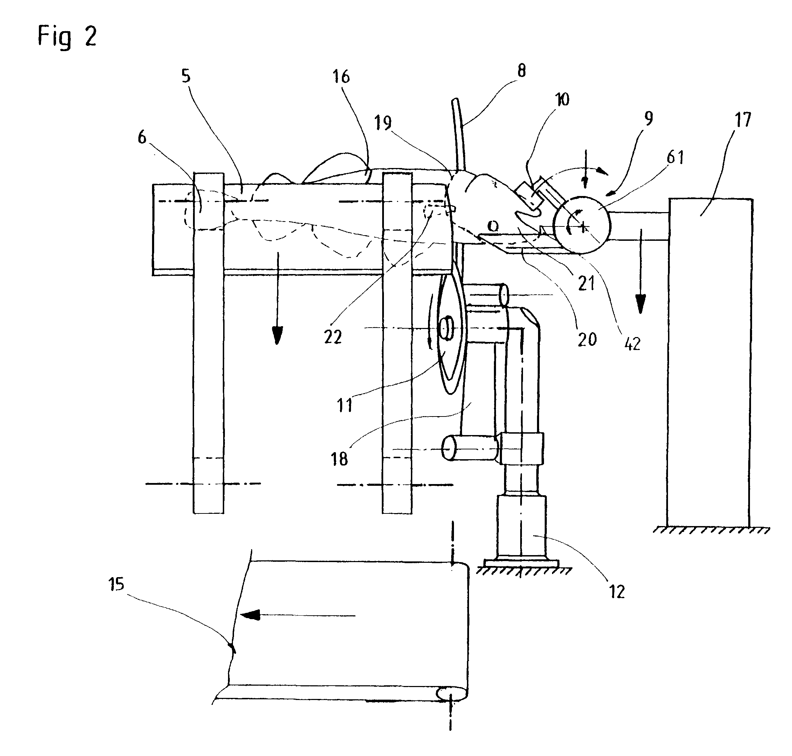

Fig. 2 shows in principle the same as fig. 1a and b, but further and in addition there are shown and indicated with reference number larger number of parts of the apparatus. A fish is shown in vertical position lying on the back. The fish body (16) lying in the supporting means so the shell half's (5) supports the sides and the back of the fish. The head of the fish (21) is in the gripping means (9) and the lower arm (20) supports the (20) neck bone and the upper arm (10) support the jaws. It is possible to rotate the gripping means about hinges (46) which the arms are supported by. Thereby it is possible to bend the head down with respect to the longitudinal axis of the fish.

Further it is showed how the supporting means (4) and the gripping means (9) are moveable in vertical direction. Between the supporting means and the gripping means a cutting means is arranged, mainly comprising two adjacent circular and rotatable cutting knives (11) equipped with driving means. Along the side and in-between the supporting means and the gripping means the guiding means (8), consisting of two ski-like bars or arms. The equipment works basically in the way that the fish is placed with the body (16) in the supporting means (4) with the belly facing upwards and the head (21) in the gripping means (9). The gripping means is moveable both in horizontal and vertical direction, as well being rotatable about the rotation-joint (46) of the gripping arms (10, 20). It is possible to bend/rotate the supporting means in direction opposite to the rotation of the gripping means. When the fish has been placed in the supporting means and the gripping means has gripped around the head, the fish is moved horizontally by movement of the gripping means (9), along the supporting means towards the guiding means (8) where the ear fine (22) lean against the guiding means (8). The head is then rotated in such a manner the snout facing down and the fish bent about the neck. In thin position the fish is moved by vertical movement parallel to the movement of the supporting means (4) and the gripping means (9). The ear fine is pushed towards the guiding means (8). In this position the fish is moved towards the cutting knives (11) that cuts the neck from the body along the neck bone. Simultaneously as the fish is moved through the cutting knives the fish is bent back so the line of cutting (19) becomes curved around or about the ear fine. It is possible to reduce the distance between the guiding means (8) according to the size of the fish, but the guiding means are connected to the frame by moveable joint.

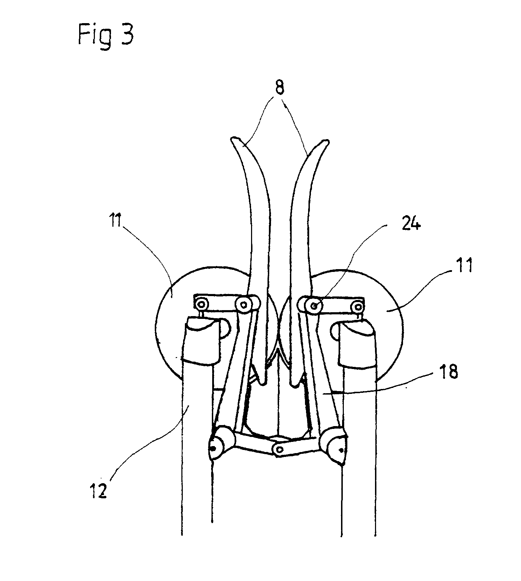

Fig. 3 shows the placement of the cutting knives (11) and the guiding means (8). The guiding means form a kind of v-formed slit the fish is moved in-between. The guiding means are moveable to the sides as the are supported by bearing (24). The arm guides the fish towards the cutting knives.

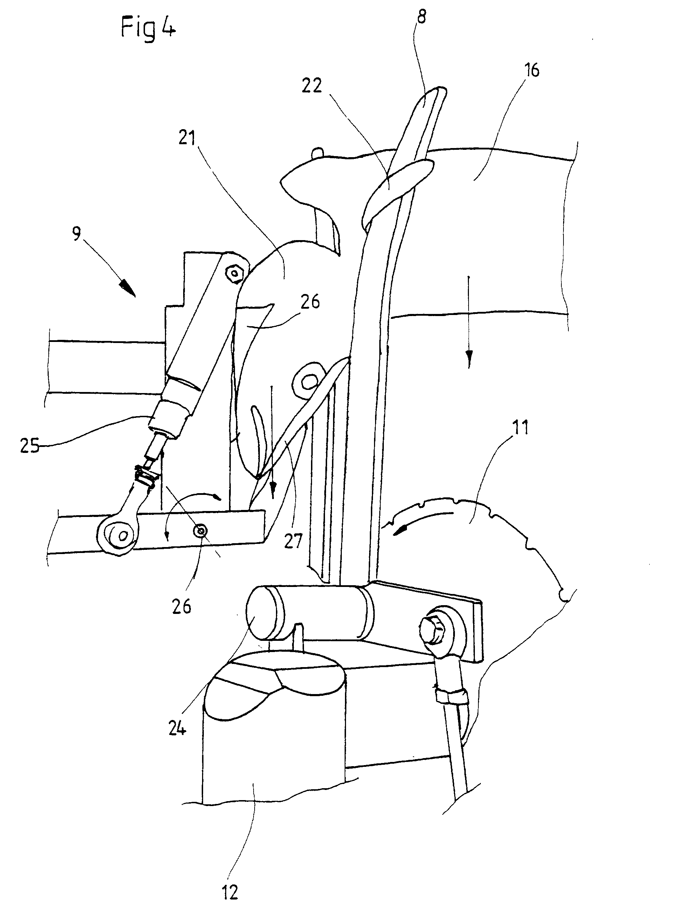

Fig. 4 shows the fish (16) as the head (21) is fastened to the gripping means (9) and has been bent down. The upper and lower gripping arms (10, 20) support the neck and the jaws. Cylinder (25) guide the bending of the gripping means (9). The ear fine (22) lean along the guiding arms and in this position the fish is moved towards the cutting knives.

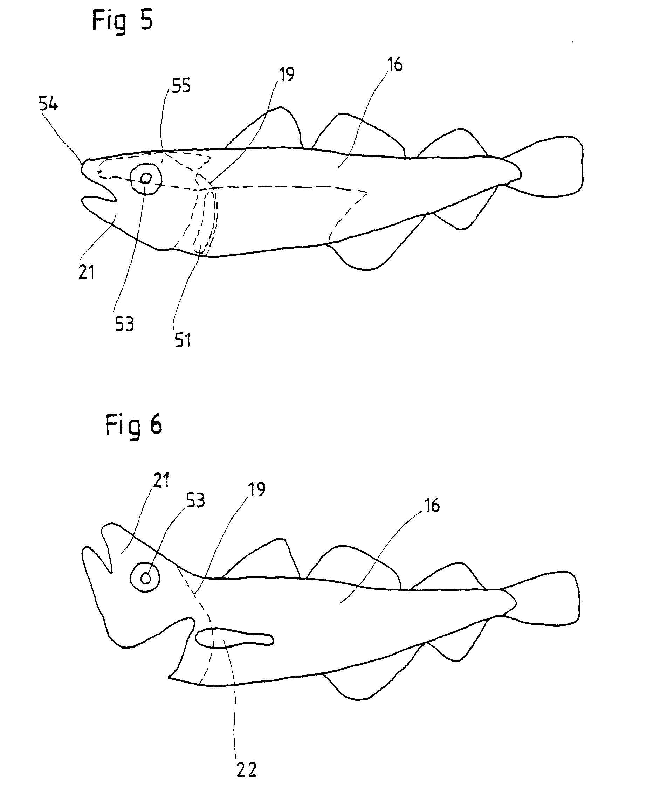

Fig. 5 and 6 show the main parts of the fish the invention base upon. It is possible to use the snout (54) eyes or the eye-sockets (53), the ear fine (22) for location and adjustment different parts of the apparatus. A cutting curve (19) following the backside of the skull bone (55), down and behind the ear fine (22) and behind and along the collar bone (51). By following this cutting curve maximum yield of the product is achieved. This cutting curve is adapted to production of filets, but if the fish was larger aimed at production of salted fish, the cutting curve would be in front of the ear fine (22) and the collar bone (51).

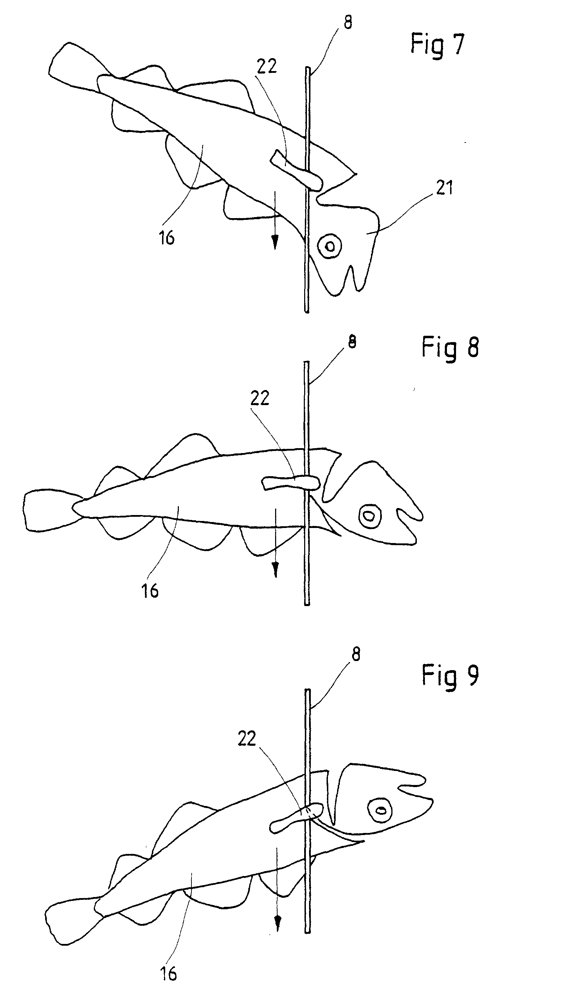

Fig. 7, 8 and 9 show three different positions of the fish as it is cut in the apparatus. Figure 7 shows the fish in its position just before the cutting. The head (21) is bent down or backwards and the body (16) is bent slightly. The ear fine (22) lean against guiding arms (8) and the fish is moved as that toward the cutting device. Figure 8 shows the fish as the cutting along the skull bone (55) is completed towards the ear fine (22). The head (21) has been adjusted back so as the fish is moved further down the cutting is curved around the ear fine. Figure 9 shows how the head (21) has been adjusted or bent up and the body (16) downward in such a way the cutting follows the collar bone.

It thus will be appreciated that the objects of the present invention have been fully and effectively accomplished. It will be realised, however, that the foregoing preferred specific embodiment has been shown and described for the purpose of this invention and are subject to change without departure from its basic principles. Therefor, this invention includes all modifications and equivalents encompassed with the scope of the following patent claims.

## Claims

1. An apparatus for processing fish, including severing the head of a fish, said apparatus comprising a structural frame (31) and a severing means (33) supported by the frame, for cutting the head from a fish body, said severing means (33) comprising,
• a moveable supporting means (4), for receiving and supporting the fish body (16) while the head (21) is cut there off and thereafter releasing it,
• a gripping means (9), for gripping and positioning the head (21) of the fish prior to and during the cutting, **characterised in that** the apparatus comprises means for rotating the gripping means with respect to the frame, and means for transporting the gripping means (9) towards the cutting means (35), so said gripping means is moveable in such a manner, that the fish head is bent backwards with respect to the longitudinal axis of the fish, before the cutting is engaged and then gradually turned back towards the same longitudinal axis during the cutting operation, in order to obtain a optimal cutting curve between the fish head (21) and the body (16), and thereafter releasing it, and
• a moveable cutting means (35), for cutting the head (21) from the fish body (16), where the fish body (16) is placed in the supporting means (4), and the head (21) in the gripping means (9).

2. An apparatus according to claim 1, **characterised in that** the severing means (33) further comprising a guiding means (8) for the pectorial fins (22) of the fish to be guided towards and/or along as the fish is moved through the apparatus.

3. An apparatus according to claim 1 or 2, **characterised in that** the severing means (33) further comprising,
• one or more measuring means (36) for measuring and collecting certain data of the characteristics of the fish in the supporting means (4) or prior thereto, and
• a data processing means (37) for communicating with the measuring means (36) and receiving data of the characteristics of the individual fish, the processing means using the data to calculate the optimal cutting curve for the respective fish and activating other means of the apparatus in accordance there to.

4. An apparatus according to claim 3, **characterised in that** the measuring means (36), comprising a weighing unit for weighing the fish prior to cutting of the head, and/or length measuring device for measuring one or more of certain parameters of fish, and/or device for locating certain parts of the fish, e.g. the snout (54) of the fish, eyes (53) or the pectoral fins (22).

5. An apparatus according to any of the preceding claims, **characterised in** comprising further; a first conveyor in-feed means (32), on or attach to the frame (31) for feeding the fish to the supporting means (4) and the gripping means (9), and a second conveyor means (15), for receiving the fish from the severing means (33) and transporting the fish body (16) with or without the head (21) away for further processing.

6. Apparatus according to one or more of the claims 1-5, **characterised in that** the supporting means (4) is moveable in respect to the cutting means (35).

7. Apparatus according to one or more of the claims 1-6, **characterised in that** the supporting means (4), is turnable with respect to its axes of movement in such a way that the fish is further bent around the neck/the cutting area, in order to obtain the optimal cutting curve.

8. Apparatus according to one or more of the claims 1-7, **characterised in that** the supporting means (4) further consists of two opposite supporting shells, a upper shell and lower shell, that support the back and respectively the belly of the fish under its transportation.

9. Apparatus according to one or more of the claims 1-8, **characterised in that** the supporting means (4) further consists of a basket like supporting means splitted symmetrically in two opposite supporting shells (5), that support the sides of the fish under its transportation.

10. Apparatus according to any one of the claims 1-9, **characterised in that** the gripping means (9), for gripping and holding the head of the fish during the severing comprise a gripper including two independable moveable gripping arms (10, 20).

11. Apparatus according to one or more of the claims 1-10, **characterised in that** the gripping means (9), comprise at least two jaw wises (10, 20) being independently turntable and moveably supported by the frame, said gripping means thereby able to grip and hold the fish head in a predetermined position during the severing of the head.

12. Apparatus according to one or more of the claims 1-11, **characterised in that** the gripping means (9), further comprise a snout (54) position device (42) for positioning the snout of the fish head in the gripping means.

13. Apparatus according to one or more of the preceding claims, **characterised in that** the cutting means (35) comprises two opposite to each other rotable circular cutting blades (11).

14. Apparatus according to claim 14, **characterised in that** the two cutting blades (11) are arranged in such a way that their respective planes tangent to each other and their angular placement is adjustable to be preferably between 90-180°, more preferably 140-175°, most preferably 155-160°.

15. Apparatus according to one or more of the preceding claims, **characterised in that** the cutting means (35) further comprises a two opposite to each other, chain saw a like cutting blades.

16. Apparatus according to claim 2, **characterised in that** the guiding means (8) consists of two guide rails merging into parallel inner edge arranged symmetrically to the cutting blades of the cutting means.

17. Apparatus according to any of the claims above, **characterised in that** the gripping means (9) is connected by an arm to a sledge (17) and is movable therealong up and down.

18. A method for automatically severing the head from fish, said method comprising transportation of the fish by a first conveyor means (32), meant for transporting the fish towards a severing means (33) in which the head is cut from the body, the fish body is supported and the head gripped and the head severed from the body in such a manner that an optimum cutting curve (19) is achieved, and finally the head and body transported by a second conveyor means (15) for further processing, **characterised in that**;
• the fish is fed into a supporting means (4), with the belly facing away from the cutting means,
• the head is gripped with a gripping means (9), and adjusted according to the cutting means (35),
• the gripping means subsequently rotated with respect to the body and moved in such a manner that the head is bent backwards, and transported towards the cutting means (35),
• during the cutting, the head is bent/rotated back towards normal position, by rotation/movement of the gripping means (9) and thereby obtaining an optimal cutting curve (19) between the head and the body.

19. A method for automatically severing the head from fish according to claim 18, **characterised in that** the fish is moved lengthways towards the tail until the pectoral fins (22) are being supported by a guiding means (8).

20. A method for automatically severing the head from fish according to claim 18 or 19, **characterised in that** the gripping of the fish by the gripping means (9) and the fish placement in the apparatus is being adjusted for each individual fish based upon premeasurements and/or calculation of the size and/or type of fish.

## Patentansprüche

1. Vorrichtung zum Verarbeiten von Fisch, umfassend das Abtrennen des Kopfes eines Fischs, wobei die Vorrichtung einen konstruktiven Rahmen (31) und ein Abtrennmittel (33), welches durch den Rahmen gehalten wird, zum Abschneiden des Kopfes von einem Fischkörper umfasst, wobei das Abtrennmittel (33) umfasst:
• ein bewegliches Tragemittel (4) zum Aufnehmen und Tragen des Fischkörpers (16), während der Kopf (21) an diesem Ort abgeschnitten wird, und zum danach folgenden Freigeben desselben,
• ein Greifmittel (9) zum Ergreifen und Positionieren des Kopfes (21) des Fisches vor dem Abschneiden und während des Abschneidens, **dadurch gekennzeichnet, dass** die Vorrichtung Mittel zum Drehen des Greifmittels in Bezug auf den Rahmen und Mittel zum Befördern des Greifmittels (9) in Richtung des Schneidmittels (35) umfasst, so dass das Greifmittel derart beweglich ist, dass der Fischkopf nach hinten in Bezug auf die Längsachse des Fisches gebogen wird, bevor das Abschneidmittel in Eingriff gelangt, und dann schrittweise in Richtung derselben Längsachse während des Abschneidvorgangs zurück gebogen wird, um eine optimale Schnittkurve zwischen dem Fischkopf (21) und dem Körper (16) zu erzielen, und danach folgendes Freigeben desselben, und
• ein bewegliches Schneidmittel (35) zum Abschneiden des Kopfes (21) vom Fischkörper (16), wobei der Fischkörper (16) im Tragemittel (4) und der Kopf (21) im Greifmittel (9) angeordnet ist.

2. Vorrichtung nach Anspruch 1, **dadurch gekennzeichnet, dass** das Abtrennmittel (33) des Weiteren ein Führungsmittel (8) für die Brustflossen (22) des Fisches umfasst, um sie in Richtung und/oder weiter mit zu führen, wenn der Fisch durch die Vorrichtung bewegt wird.

3. Vorrichtung nach Anspruch 1 oder 2, **dadurch gekennzeichnet, dass** das Abtrennmittel (33) des Weiteren umfasst:
• ein oder mehr Messmittel (36) zum Messen und Sammeln bestimmter Daten über die Merkmale des Fisches im Tragemittel (4) oder vor diesem und
• ein Datenverarbeitungsmittel (37) zum Kommunizieren mit den Messmitteln (36) und zum Empfangen von Daten über die Merkmale des einzelnen Fisches, wobei das Verarbeitungsmittel die Daten einsetzt, um die optimale Schnittkurve für den jeweiligen Fisch zu berechnen, und zum Aktivieren anderer Mittel der Vorrichtung in Übereinstimmung damit.

4. Vorrichtung nach Anspruch 3, **dadurch gekennzeichnet, dass** das Messmittel (36) eine Wiegeeinheit zum Abwiegen des Fisches vor dem Abschneiden des Kopfes und/oder ein Längenmessgerät zum Messen eines oder mehrerer von bestimmten Parametern des Fisches und/oder ein Gerät zum örtlich Erfassen bestimmter Teile des Fisches z.B. des Mauls (54) des Fisches, der Augen (53) oder der Brustflossen (22) umfasst.

5. Vorrichtung nach jedem der vorangehenden Ansprüche, **dadurch gekennzeichnet, dass** sie des Weiteren umfasst: ein erstes Zuführbandfördermittel (32), auf oder am Rahmen (31) befestigt, zum Zuführen des Fisches zu dem Tragemittel (4) und dem Greifmittel (9), und ein zweites Bandefördermittel (15) zum Aufnehmen des Fisches vom Abtrennmittel (33) und Weitertransportieren des Fischkörpers (16) mit oder ohne Kopf (21) zu weiteren Verarbeitungsschritten.

6. Vorrichtung nach einem oder mehreren der Ansprüche 1-5, **dadurch gekennzeichnet, dass** das Tragemittel (4) in Bezug auf das Schneidmittel (35) beweglich ist.

7. Vorrichtung nach einem oder mehreren der Ansprüche 1-6, **dadurch gekennzeichnet, dass** das Tragemittel (4) in Bezug auf seine Bewegungsachsen auf solch eine Weise drehbar ist, dass der Fisch weiter um seinen Nacken/dem Schnittbereich biegbar ist, um die optimale Schnittkurve zu erzielen.

8. Vorrichtung nach einem oder mehreren der Ansprüche 1-7, **dadurch gekennzeichnet, dass** das Tragemittel (4) des Weiteren aus zwei gegenüberliegenden Trageschalen, einer oberen Schale und einer unteren Schale, besteht, welche den Rücken beziehungsweise den Bauch des Fisches während seines Transports tragen.

9. Vorrichtung nach einem oder mehreren der Ansprüche 1-8, **dadurch gekennzeichnet, dass** das Tragemittel (4) des Weiteren aus einem Korb besteht, welcher wie die Tragemittel symmetrisch in zwei gegenüberliegende Trageschalen (5) geteilt ist, welche die Seiten des Fisches während seines Transports tragen.

10. Vorrichtung nach einem oder mehreren der Ansprüche 1-9, **dadurch gekennzeichnet, dass** das Greifmittel (9) zum Ergreifen und Halten des Fischkopfes während des Abtrennens einen Greifer umfasst, welcher zwei unabhängig bewegbare Greifarme (10, 20) aufweist.

11. Vorrichtung nach einem oder mehreren der Ansprüche 1-10, **dadurch gekennzeichnet, dass** das Greifmittel (9) wenigstens zwei Backenklemmen (10, 20) umfasst, welche unabhängig drehbar und bewegbar sind, wobei sie vom Rahmen getragen werden, wobei das Greifmittel dadurch in der Lage ist, den Fischkopf in einer vorbestimmten Position während des Abtrennens des Kopfes zu ergreifen und zu halten.

12. Vorrichtung nach einem oder mehreren der Ansprüche 1-11, **dadurch gekennzeichnet, dass** das Greifmittel (9) des weiteren eine Positionierungsvorrichtung (42) für das Maul (54) zum Positionieren des Mauls des Fischkopfes im Greifmittel umfasst.

13. Vorrichtung nach jedem der vorangehenden Ansprüche, **dadurch gekennzeichnet, dass** das Schneidmittel (35) zwei einander gegenüberliegende rotierende Schneidscheiben (11) aufweist.

14. Vorrichtung nach Anspruch 14, **dadurch gekennzeichnet, dass** die zwei Schneidscheiben (11) auf solche Weise angeordnet sind, dass ihre jeweiligen Ebenen tangential zu einander sind und ihre winkelige Anordnung einstellbar ist, um vorzugsweise zwischen 90-180° zu liegen, besser zwischen 140-175°, am besten zwischen 155-160°.

15. Vorrichtung nach jedem der vorangehenden Ansprüche, **dadurch gekennzeichnet, dass** das Schneidmittel (35) des Weiteren zwei einander gegenüberliegende, kettensägenartige Schneidklingen umfasst.

16. Vorrichtung nach Anspruch 2, **dadurch gekennzeichnet, dass** das Führungsmittel (8) aus zwei Führungsschienen besteht, welche in eine parallele innere Kante zusammenlaufen, die symmetrisch zu den Schneidklingen des Schneidmittels angeordnet ist.

17. Vorrichtung nach jedem der obigen Ansprüche, **dadurch gekennzeichnet, dass** das Greifmittel (9) durch einen Arm mit einem Schlitten (17) verbunden ist und dort entlang nach oben und unten beweglich ist.

18. Verfahren zum automatisierten Abtrennen von Fischköpfen, wobei das Verfahren den Transport des Fisches durch ein erstes Fördermittel (32), welches zum Transportieren des Fisches zu einem Abtrennmittel (33) vorgesehen ist, in welchem der Kopf vom Körper abgeschnitten wird, wobei der Fischkörper getragen und der Kopf ergriffen und der Kopf vom Körper auf solch eine Weise abgetrennt wird, dass eine optimale Schnittkurve (19) erzielt wird, und schließlich den Transport von Kopf und Körper zu weiterer Verarbeitung durch ein zweites Fördermittel (15) umfasst, **dadurch gekennzeichnet, dass**:
• der Fisch in ein Tragemittel (4) zugestellt wird, wobei der Bauch vom Schneidmittel weggedreht ist,
• der Kopf mit einem Greifmittel (9) ergriffen und in Übereinstimmung mit dem Schneidmittel (35) eingestellt wird,
• das Greifmittel in weiterer Folge in Bezug auf den Körper gedreht und auf solch eine Weise bewegt wird, dass der Kopf nach hinten gebogen ist, und zum Schneidmittel (35) befördert wird,
• während des Schneidens der Kopf zurück in seine normale Position durch Drehung/Bewegung des Greifmittel (9) gebogen/gedreht wird, wodurch eine optimale Schnittkurve (19) zwischen dem Kopf und dem Körper erzielt wird.

19. Verfahren zum automatisierten Abtrennen von Fischköpfen nach Anspruch 18, **dadurch gekennzeichnet, dass** der Fisch in Längsrichtung in Richtung des Schwanzes bewegt wird, bis die Brustflossen (22) durch ein Führungsmittel (8) gehalten werden.

20. Verfahren zum automatisierten Abtrennen von Fischköpfen nach Anspruch 18 oder 19, **dadurch gekennzeichnet, dass** das Ergreifen des Fisches durch das Greifmittel (9) und die Anordnung des Fisches in der Vorrichtung für jeden einzelnen Fisch auf der Grundlage der vorher durchgeführten Messungen und/oder Berechnung der Größe und/oder der Art des Fisches eingestellt wird.

## Revendications

1. Appareil pour traiter du poisson, incluant le tranchage de la tête du poisson, ledit appareil comprenant un cadre structural (31) et un moyen pour trancher (33) supporté par le cadre, pour couper la tête du corps d'un poisson, ledit moyen pour trancher (33) comprenant :
- un moyen de support (4) mobile pour recevoir et supporter le corps du poisson (16) pendant que la tête (21) est tranchée du corps, et pour le relâcher ensuite,
- un moyen de préhension (9) pour saisir et positionner la tête (21) du poisson avant et pendant le tranchage, **caractérisé en ce que** l'appareil comprenne des moyens pour faire pivoter le moyen de préhension en fonction du cadre, et des moyens pour transporter le moyen de préhension (9) vers le moyen de découpage (35), de sorte que ledit moyen de préhension peut être déplacé de manière à ce que la tête du poisson soit courbée en arrière en fonction de l'axe longitudinal du poisson avant de commencer à couper, et soit ensuite progressivement ramenée selon le même axe longitudinal pendant l'opération de tranchage, afin d'obtenir une courbe optimale de découpage entre la tête du poisson (21) et le corps (16), et le relâchant après cela, et
- un moyen de découpage mobile (35) pour couper la tête (21) du corps du poisson (16), le corps du poisson (16) étant placé dans le moyen de support (4), et la tête (21) dans le moyen de préhension (9).

2. Appareil selon la revendication 1, **caractérisé en ce que** le moyen pour trancher (33) comprenne par ailleurs un moyen de guidage (8) pour guider les nageoires pectorales (22) du poisson vers et/ou le long lorsque le poisson est déplacé à travers l'appareil.

3. Appareil selon l'une quelconque des revendications 1 ou 2, **caractérisé en ce que** le moyen pour trancher (33) comprenne par ailleurs :
- un ou plusieurs moyens de mesurage (36) pour mesurer et collecter certaines données concernant les caractéristiques du poisson dans le moyen de support (4) ou avant qu'il n'y soit, et
- un moyen de traitement des données (37) pour communiquer avec le moyen de mesurage (36) et recevoir des données concernant les caractéristiques du poisson individuel, le moyen de traitement utilisant les données pour calculer la courbe de découpage optimale pour le poisson respectif et activant d'autres moyens de l'appareil en fonction de cela.

4. Appareil selon la revendication 3, **caractérisé en ce que** le moyen de mesurage (36) comprenne une unité de pesage pour peser le poisson avant de couper la tête, et/ou un appareil de mesurage de la longueur pour mesurer un ou plusieurs de certains paramètres du poisson, et/ou un appareil pour localiser certaines parties du poisson, par exemple le museau (54), les yeux (53) ou les nageoires pectorales (22).

5. Appareil selon l'une quelconque des revendications précédentes, **caractérisé en ce qu'**il comprenne par ailleurs un premier moyen d'amenée - d'alimentation (32), sur ou attaché au cadre (31) pour amener le poisson au moyen de support (4) et au moyen de préhension (9), et un deuxième moyen de transport (15) pour recevoir le poisson en provenance du moyen pour trancher (33) et pour emmener le corps du poisson (16), avec ou sans la tête (21), pour un traitement ultérieur.

6. Appareil selon l'une quelconque ou plusieurs des revendications 1-5, **caractérisé en ce que** le moyen de support (4) peut se déplacer en fonction du moyen de découpage (35).

7. Appareil selon l'une quelconque des revendications 1-6, **caractérisé en ce que** le moyen de support (4) peut tourner en fonction de son axe de mouvement de manière à ce que le poisson soit d'avantage courbé au niveau de la zone du cou/de découpage, afin d'obtenir la courbe de découpage optimale.

8. Appareil selon l'une quelconque ou plusieurs des revendications 1-7, **caractérisé en ce que** le moyen de support (4) se constitue par ailleurs de deux coquilles de support opposées, une coquille supérieure et une coquille inférieure, lesquelles supportent respectivement le dos et le ventre du poisson pendant son transport.

9. Appareil selon l'une quelconque ou plusieurs des revendications 1-8, **caractérisé en ce que** le moyen de support (4) se constitue par ailleurs d'un moyen de support semblable à une corbeille divisée symétriquement en deux coquilles de support (5) opposées, lesquelles supportent les côtés du poisson pendant son transport.

10. Appareil selon l'une quelconque ou plusieurs des revendications 1-9, **caractérisé en ce que** le moyen de préhension (9) pour saisir et tenir la tête du poisson pendant le tranchage comprenne une pince comprenant deux bras de préhension (10, 20) pouvant se mouvoir indépendamment.

11. Appareil selon l'une quelconque ou plusieurs des revendications 1-10, **caractérisé en ce que** le moyen de préhension (9) comprenne au moins deux genres de mâchoires de serrage (10, 20) pouvant tourner indépendamment et être supportées de manière mobile par le cadre, ledit moyen de préhension étant ainsi capable de saisir et tenir la tête du poisson dans une position prédéterminée pendant le tranchage de la tête.

12. Appareil selon l'une quelconque ou plusieurs des revendications 1-11, **caractérisé en ce que** le moyen de préhension (9) comprenne par ailleurs un dispositif de positionnement (42) du museau (54) pour positionner le museau de la tête du poisson dans le moyen de préhension.

13. Appareil selon l'une ou plusieurs des revendications précédentes, **caractérisé en ce que** le moyen de découpage (35) comprenne deux lames de coupe (11) opposées l'une par rapport à l'autre, rotatives et circulaires.

14. Appareil selon la revendication 14, **caractérisé en ce que** les deux lames de coupe (11) sont disposées de manière à ce que leurs plans respectifs tangeants l'un par rapport à l'autre et leur placement angulaire soient ajustables pour être de préférence compris entre 90-180°, de manière préférée de 140-175°, et de manière particulièrement préférée de 155-160°.

15. Appareil selon l'une quelconque ou plusieurs des revendications précédentes, **caractérisé en ce que** le moyen de découpage (35) comprenne par ailleurs deux lames de coupe opposées l'une par rapport à l'autre et semblables à une scie à chaîne.

16. Appareil selon la revendication 2, **caractérisé en ce que** le moyen de guidage (8) se constitue de deux barres conductrices fusionnant en une bordure parallèle interne disposée symétriquement par rapport aux lames de coupe du moyen de découpage.

17. Appareil selon l'une quelconque des revendications précédentes, **caractérisé en ce que** le moyen de préhension (9) est relié par un bras à un traîneau (17) et peut se déplacer le long de celui-ci vers le haut et le bas.

18. Méthode pour le tranchage automatique de la tête d'un poisson, ladite méthode incluant le transport du poisson à l'aide d'un premier moyen d'amenée (32) conçu pour transporter le poisson vers un moyen pour trancher (33), dans lequel la tête est coupée du corps, le corps du poisson étant supporté et la tête étant saisie, et la tête étant tranchée du corps de manière à obtenir une courbe de découpage (19) optimale, la tête et le corps étant finalement transportés par un deuxième moyen de transport (15) pour un traitement ultérieur, **caractérisée en ce que**:
- le poisson est amené dans un moyen de support (4) avec le ventre tourné dans la direction opposée au moyen de découpage,
- la tête est saisie à l'aide d'un moyen de préhension (9), et est ajustée en fonction du moyen de découpage (35),
- le moyen de préhension tourne ensuite en fonction du corps et se déplace de manière à ce que la tête soit courbée en arrière, et soit transportée vers le moyen de découpage (35),
- pendant le découpage, la tête est courbée/tournée à nouveau dans sa position normale grâce à une rotation/un mouvement du moyen de préhension (9), ce qui permet d'obtenir de la sorte une courbe de découpage (19) optimale entre la tête et le corps.

19. Méthode pour le tranchage automatique de la tête d'un poisson selon la revendication 18, **caractérisée en ce que** le poisson est déplacé longitudinalement vers la queue jusqu'à ce que les nageoires pectorales (22) soient supportées par un moyen de guidage (8).

20. Méthode pour le tranchage automatique de la tête d'un poisson selon l'une quelconque des revendications 18 ou 19, **caractérisée en ce que** la saisie du poisson par le moyen de préhension (9) et le placement du poisson dans l'appareil sont ajustés pour chaque poisson individuel sur la base de mesures préalables et/ou calculs de la taille et où du type du poisson.
